**Europäisches Patentamt**

**European Patent Office**

**Office européen des brevets**

(19)

(11) Veröffentlichungsnummer: **0 131 711**

**A2**

(12) # EUROPÄISCHE PATENTANMELDUNG

(21) Anmeldenummer: **84105547.8**

(22) Anmeldetag: **16.05.84**

(51) Int. Cl.⁴: **G 05 G 7/04**
//G05G11/00

(30) Priorität: **18.05.83 DE 3318114**

(43) Veröffentlichungstag der Anmeldung:
**23.01.85 Patentblatt 85/4**

(84) Benannte Vertragsstaaten:
**DE FR GB**

(71) Anmelder: **INTERNATIONAL HARVESTER COMPANY MBH**
**Industriestrasse 39**
**D-4040 Neuss(DE)**

(84) Benannte Vertragsstaaten:
**DE**

(71) Anmelder: **INTERNATIONAL HARVESTER COMPANY**
**401 North Michigan Avenue**
**Chicago Illinois 60611(US)**

(84) Benannte Vertragsstaaten:
**FR GB**

(72) Erfinder: **Schwäbe, Jürgen**
**Herrenshoffer Strasse 33**
**D-4052 Korschenbroich 1(DE)**

(74) Vertreter: **Zoepke, Carl O.**
**Erhardtstrasse 8**
**D-8000 München 5(DE)**

(54) **Betätigungsvorrichtung zur zusätzlichen Fernbetätigung der Lageregelung eines hydraulischen Krafthebers.**

(57) Bei einer zusätzlich zur Betätigungsvorrichtung für das Regelwegeventil eines hydraulischen Krafthebers vorgesehenen Betätigungsvorrichtung ist zur Fernbetätigung seiner Lageregelung außerhalb der Fahrerkabine eines landwirtschaftlichen Kraftfahrzeugs, insbesondere Ackerschleppers, der schwenkbare Handhebel (11) nach Erreichen eines Teils eines dem gesamten Hub des Kraftheber-Kolbens entsprechenden Stellwegs mechanisch arretierbar oder in seinem Schwenkweg begrenzbar. Dadurch wird der Handhebel im kritischen Hubbereich wirkungslos, in welchem die Hubbewegung zur Lageregelung unproportional ist. Der restliche Hubweg, ohne Fernbedienung auch der volle Hubweg, ist vom Fahrersitz aus verstellbar. Der durch Anschläge (13, 13a) oder Sperrhebel (31) arretierbare Handhebel ist über eine aufhebbare formschlüssige Verbindung und einen Mitnehmer (17) mit einem Zahnrad (15) oder Zahnsegment koppelbar, welches bei Drehung eine Zahnstange (20) bewegt, von der ein biegsames Gestänge (21) zum Regelwegeventil führt. Nach Durchgang der Zahnstange (20) rastet der Sperrhebel (31), durch eine Kulisse (33) in der Zahnstange während der Verdrehung des Zahnrades von diesem auf Abstand gehalten, als Klinkenhebel (Ansatz 32) in eine Zahnlücke ein und blockiert Zahnrad und Handhebel.

FIG. 1

- 1 -

BETÄTIGUNGSVORRICHTUNG ZUR ZUSÄTZLICHEN FERNBETÄTIGUNG

DER LAGEREGELUNG EINES HYDRAULISCHEN KRAFTHEBERS

Die Erfindung bezieht sich auf eine Betätigungsvorrichtung für ein Regelwegeventil eines hydraulischen Krafthebers eines landwirtschaftlichen Kraftfahrzeugs, insbesondere Ackerschleppers, zur zusätzlichen Fernbetätigung der Lageregelung des Krafthebers und der damit verbundenen Geräteschiene unabhängig von der in der Fahrerkabine angeordneten Betätigungsvorrichtung unter Verwendung eines drehbar gelagerten Handhebels, mit dem drehfest ein Zahnrad verbunden ist, dessen Drehbewegung bei Verstellung des Handhebels in eine Längsbewegung einer verschiebbar geführten und mit dem Zahnrad kämmenden Zahnstange überführbar ist und die Längsbewegung der Zahnstange mittels eines biegsamen Gestänges an das Regelgestänge des Regelwegeventils übertragbar ist.

Derartige Vorrichtungen zur Fernbetätigung der Lageregelung des Krafthebers werden eingesetzt, um außerhalb des Kraftfahrzeugs auf das an der Schlepper-Dreipunkt-Hydraulik aufgesattelte oder angebaute Gerät beim An- oder Abkoppeln und bei der Arbeit besser überblicken zu können, als dies von der Fahrerkabine des Fahrzeugs aus möglich ist. Solche Fernbetätigungsvorrichtungen befinden sich daher in der Nähe des Schlepperhecks. Sie sind mit der in der Fahrerkabine vorhandenen Betätigungsvorrichtung zur Lageregelung des Krafthebers mechanisch gekoppelt, so daß sie unabhängig voneinander entweder von der Fahrerkabine aus oder außerhalb des Kraftfahrzeugs bedient werden können.

Steuervorrichtungen zur Lageregelung des Krafthebers haben die Eigenart, nur etwa in den unteren zwei Dritteln des gesamten Hubweges des Kraftheber-Zylinders langsam und gut dosierbar zu regeln. Im oberen Drittel des Hubweges erfolgt die Bewegung abrupt und beschleunigt. In diesem Bereich besteht somit keine Proportionalität zwischen Hubbewegung und Lageregelung. Dies wirkt sich entsprechend bei Bedienung der Fernbetätigungsvorrichtung aus, was zu einer Gefahr für den Betreiber der Anlage werden kann, wenn dieser ungewollt den unteren, gut dosierbaren Bereich überführt und der Kraftheber mit Dreipunktaufhängung und eingehängtem Gerät unkontrolliert und beschleunigt hochgehoben wird.

Es ist daher Aufgabe der Erfindung, handelsübliche Fernbetätigungsvorrichtungen dahingehend zu verbessern, daß sie im kritischen Hubbereich des Kraftheber-Kolbens keine Wirkung mehr ausüben, daß jedoch nach wie vor die Möglichkeit besteht, den restlichen, aber auch ohne Fernbedienung den vollen Hubweg vom Fahrersitz aus zu verstellen.

Diese Aufgabe wird erfindungsgemäß dadurch gelöst, daß der Handhebel für die Fernbetätigung der Lageregelung des Krafthebers nach Erreichen eines Teils seines dem gesamten Hub des Kraftheber-Zylinders entsprechenden Stellweges, vorzugsweise von zwei Dritteln seines Stellweges, mechanisch arretierbar oder in seinem Schwenkweg begrenzbar ist.

In vorteilhafter Ausgestaltung der Erfindung ist für eine derartige Schwenkbegrenzung des Handhebels ein Anschlag vorgesehen, der nach einer Ausführungsform der Erfindung an einem Gehäuseansatz des die Lagerwelle des Handhebels aufnehmenden Gehäuseteils auf Abstand zur Schwenkachse des Handhebels angeordnet ist und in die senkrecht zur Schwenkachse verlaufende Ebene des Handhebels hineinragt. Dieser Anschlag dient gleichzeitig zur Schwenkwegbegrenzung des Handhebels in Richtung seiner Ausgangslage.

Nach einer anderen Ausführungsform der Erfindung ist dieser Anschlag ein vertikal schwenkbarer Sperrhebel, dessen mit einem hakenförmigen Ansatz versehenes freies Ende in einer an der Zahnstange angeordneten Kulisse geführt und während der Verstellung des Handhebels auf Abstand vom Zahnrad des Handhebels gehalten ist und der mit seinem hakenförmigen Ansatz nach Durchgang der Zahnstange nach Art einer Sperrklinke in eine Zahnlücke des Zahnrads einrastet und den Handhebel blockiert, bevor die kritische Aushubphase des Krafthebers beginnt.

Um bei der ersten Ausführungsform die Verstellbewegung des Handhebels auf die mit dem Zahnrad kämmende Zahnstange zu übertragen, ist mit dem Zahnrad drehfest ein Mitnehmer verbunden, der über eine aufhebbare formschlüssige Verbindung mit dem Handhebel kuppelbar ist und vom Handhebel nach Erreichen des vorgesehenen Schwenkweges des Handhebels von diesem entkuppelbar ist.

In vorteilhafter Weise wird die formschlüssige Verbindung durch einen am Mitnehmer vorstehenden Zapfen gebildet, der durch Gegendrücken des Handhebels mit einem darin vorgesehenen Loch verbindbar ist. Im gekuppelten Zustand nimmt der Handhebel das Zahnrad über den Mitnehmer bis zum Anschlag mit und wird dann losgelassen. Der restliche Schwenkweg kann dann von der Fahrerkabine aus durchfahren werden. Der Handhebel der Fernbedienungsvorrichtung kann allerdings erst dann wieder betätigt werden, wenn zuvor von der Fahrerkabine aus das Zahnrad in den Zwei-Drittel-Bereich zurückgedreht worden ist.

Eine weitere Variante stellt eine Lösung dar, bei der die formschlüssige Verbindung durch eine am Handhebel vorgesehene Nase gebildet ist, die durch Gegendrücken des Handhebels in einem im Mitnehmer von scheibenförmiger Umrißgestalt vorgesehenen Schlitz einrastbar ist, wobei diese Nase zur Positionierung der Ausgangslage und der Lage am Ende des Schwenkweges mit zwei um 120$^{\circ}$ winkelversetzt vorstehenden Anschlägen zusammenwirkt.

Beim Loslassen des Handhebels gelangt der am Mitnehmer vorstehende Zapfen bzw. die am Handhebel vorgesehene Nase aus der eingekuppelten Lage selbsttätig in die ausgekuppelte Lage und damit der Handhebel senkrecht zu seiner Schwenkachse. Im nicht betätigten Zustand werden Zapfen oder Nasen mittels eines beispielsweise als Druckfeder ausgebildeten Federelements gegenüber dem Mitnehmer außer Eingriff gehalten.

Bei der Ausführungsform mit einem Sperrhebel ist die diesen führende Kulisse in vorteilhafter Weise in der Zahnstange eingelassen, die ihn durch eine darin angebrachte Auflauframpe in die Zahnlücke des Zahnrades einrasten läßt, nachdem der letzte Zahn der Zahnstange nicht mehr mit dem Zahnrad kämmt. Wird der restliche Schwenkweg von der Fahrerkabine aus wieder zurückgefahren, drückt die Zahnstange

0131711

die Klinke des Sperrhebels nach oben, wodurch der Sperrhebel vom Zahnrad freikommt und der erste Zahn der Zahnstange in das Zahnrad einrastet. Aus dieser Stellung heraus kann die Fernbetätigungsvorrichtung wieder mit dem Handhebel heruntergesteuert werden.

Zweckmäßigerweise ist im Zahnrad bzw. in der Zahnstange eine federbelastete Kugel eingelassen, die in einer kurz vor Erreichen des begrenzten Schwenkweges des Handhebels zur Erzeugung eines Druckpunktes in eine gehäuseseitige Rastnute einfällt, wodurch der Betreiber auf die kurz danach zu erreichende Arretierposition aufmerksam gemacht wird, so daß er nicht ungewollt den Arretiereffekt auslöst.

Bei allen Ausführungsformen der Erfindung kann darüberhinaus die Grenze des Schwenkbereichs des Handhebels optisch markiert sein.

In der Beschreibung näher erläuterte Ausführungsbeispiele der Betätigungsvorrichtung nach der Erfindung sind in der Zeichnung wiedergegeben. Es zeigen:

Fig. 1    einen Schnitt durch die Betätigungsvorrichtung nach einer Ausführungsform entlang der Schwenkachse des Handhebels gemäß der Linie I-I in Fig. 3,

Fig. 2    eine Frontansicht auf die Vorrichtung mit dem Handhebel in Ausgangsstellung, die der unteren Hubendstellung des Kraftheber-Zylinders entspricht,

Fig. 3    eine Ansicht mit $90^{\circ}$ - Stellung des Handhebels,

Fig. 4    eine Ansicht mit Ausgangsstellung und arretierter Endstellung des Handhebels,

Fig. 5    eine Ansicht mit entkuppelter Ausgangsstellung des Handhebels und fahrerkabinenseitig fortgeführter Verstellung der Regelung im oberen Drittel der Kraftheber-Steuerung,

Fig. 6    eine schematisch gehaltene Darstellung der Betätigungsvorrichtung nach einer anderen Ausführungsform zu Beginn des Verstellvorgangs,

Fig. 7    eine entsprechende Darstellung bei 90$^{o}$ - Stellung des Handhebels,

Fig. 8    eine Darstellung nach zwei Dritteln des Stellweges des Handhebels beim Einrasten des Anschlages,

Fig. 9    eine Darstellung bei arretierter Endstellung des Handhebels und fahrerkabinenseitig fortgeführter Verstellung der Regelung im oberen Drittel der Kraftheber-Steuerung,

Fig. 10   einen Schnitt durch die Betätigungsvorrichtung nach einer in bezug auf Fig. 1 abgewandelten Ausführungsform,

Fig. 11   eine Frontansicht auf diese Vorrichtung mit Mittel-Stellung des Handhebels.

- 7 -

0131711

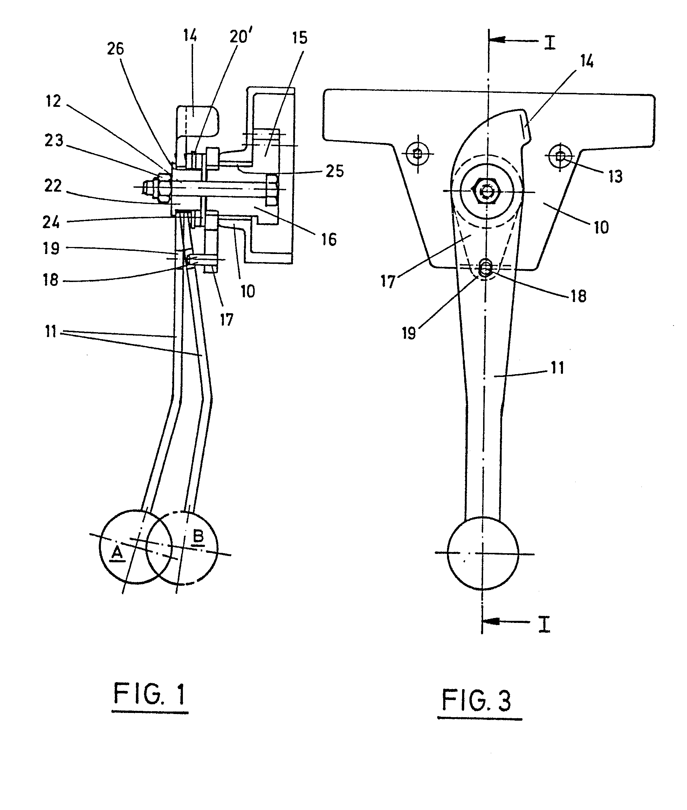

Wie Fig. 1 zeigt, weist die Betätigungsvorrichtung zur zusätzlichen Fernbetätigung der Lageregelung eines in der Zeichnung nicht dargestellten hydraulischen Krafthebers, beispielsweise eines Ackerschleppers, einen Handhebel 11 auf, der um eine horizontale Schwenkachse drehbar gelagert ist und sich winkelig zu dieser Achse leicht verkanten läßt.

Die Lagerung des Handhebels 11 besteht aus einer Lagerwelle 12, auf der eine Lagerhülse 22 zur drehbaren Aufnahme des Handhebels 11 sowie ein kreissegmentförmig mit Zähnen besetztes Zahnrad 15 durch einen Schraubbolzen 23 miteinander verspannt sind. Die Lagerhülse 22 und eine an dem Zahnrad 15 angeformte, axial vorstehende Nabe 16 sind durch einen die Lagerwelle 12 umgebenden Ring 24 voneinander getrennt. Die Nabe 16 des Zahnrads 15 wird drehbar von einer Flanschöffnung 25 eines Lagergehäuses aufgenommen.

Durch ein sich einerseits am Ring 24 und andererseits an der Innenseite des Handhebels 11 abstützendes, die Lagerhülse 22 umgebendes und als Druckfeder ausgebildetes Federelement 20' wird der Handhebel 11 senkrecht zu seiner Schwenkachse gegen eine am vorderen Ende der Lagerhülse 22 vorgesehene Ringschulter 26 in Anlage gehalten. Aus dieser in Fig. 1 mit A gezeichneten Stellung läßt sich der Handhebel 11 durch Gegendrücken in eine zu seiner Schwenkachse stumpfwinkelig verlaufende Kupplungsstellung B bringen, in welcher der Handhebel 11 mit dem Zahnrad 15 gekuppelt werden kann.

Zu diesem Zweck ist drehfest mit der Nabe 16 des Zahnrads 15 ein hebelförmiger Mitnehmer 17 verbunden, der auf Abstand zur Schwenkachse des Handhebels bzw. zur Lagerwelle 12 einen in Richtung der Schwenkebene des Handhebels ragenden Zapfen 18 trägt, der mit einem im Handhebel 11 vorgesehenen Loch 19 fluchtet und in dieses Loch einrastet, wenn der Handhebel mit dem hebelförmigen Mitnehmer 17 in Deckung gebracht und durchgedrückt wird.

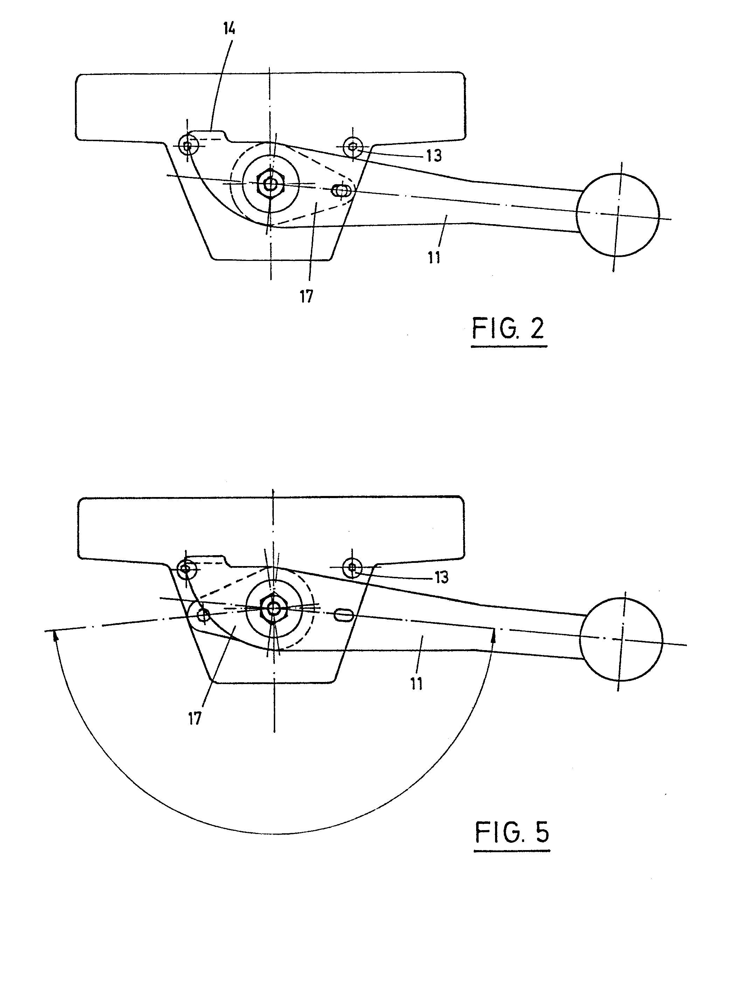

Fig. 2 veranschaulicht die Ausgangsstellung des Handhebels, in der er in der unteren Hubendstellung des Kraftheber-Zylinders mit dem Zahnrad 15 gekuppelt wird.

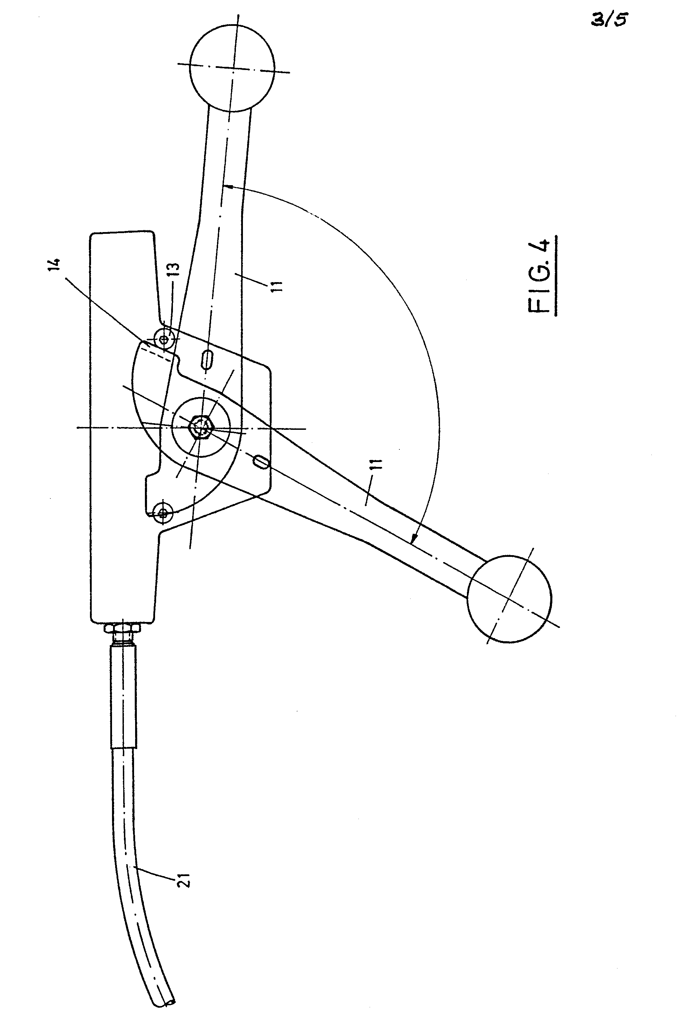

Über die in Fig. 3 gezeigte 90$^{\circ}$ - Stellung läßt sich nun der Handhebel 11 bis in die in Fig. 4 dargestellte Lage verschwenken, was zwei Dritteln seines gesamten Stellweges entspricht.

Während dieser Verschwenkung steht das Zahnrad 15 mit einer Zahnstange 20 in Eingriff, die oberhalb des Zahnrades verschiebbar geführt ist, wodurch die Drehbewegung des Zahnrades in eine Längsbewegung der Zahnstange umgeformt wird. Diese Längsbewegung vermittelt ein als Drahtkabel 21 (Bowden-Zug) ausgebildetes biegsames Gestänge an das Regelgestänge des Regelwegeventils für den Kraftheber.

Zur Schwenkwegbegrenzung des Handhebels nach zwei Dritteln seines insgesamt möglichen Stellweges bis zu der in Fig. 4 gezeigten linken Endstellung des Handhebels ist an einem Gehäuseansatz 10 des Lagergehäuses auf Abstand zur Schwenkachse des Handhebels ein Anschlag 13 angeordnet, der in die senkrecht zur Schwenkachse verlaufende Ebene des Handhebels hineinragt. Mit diesem Anschlag in Anlage befindet sich der Handhebel in seiner Ausgangslage, die dem Hubweg Null entspricht. Gegen diesen Anschlag 13 kommt am Ende des vorgesehenen Schwenkweges ein über die Lagerwelle 12 des Handhebels verlängerter Teil 14 des Handhebels zur Anlage. Über diesen auf zwei Drittel begrenzten Stellweg hinweg läßt sich der Handhebel auch dann nicht weiter verschwenken, wenn er durch Loslassen aus der gekuppelten Stellung B durch Wirkung des Federelements 20' in die entkuppelte Stellung A zurückspringt. Er ist in dieser Winkelstellung von annähernd 135$^{\circ}$ von der Ausgangsstellung an gerechnet mechanisch blockiert.

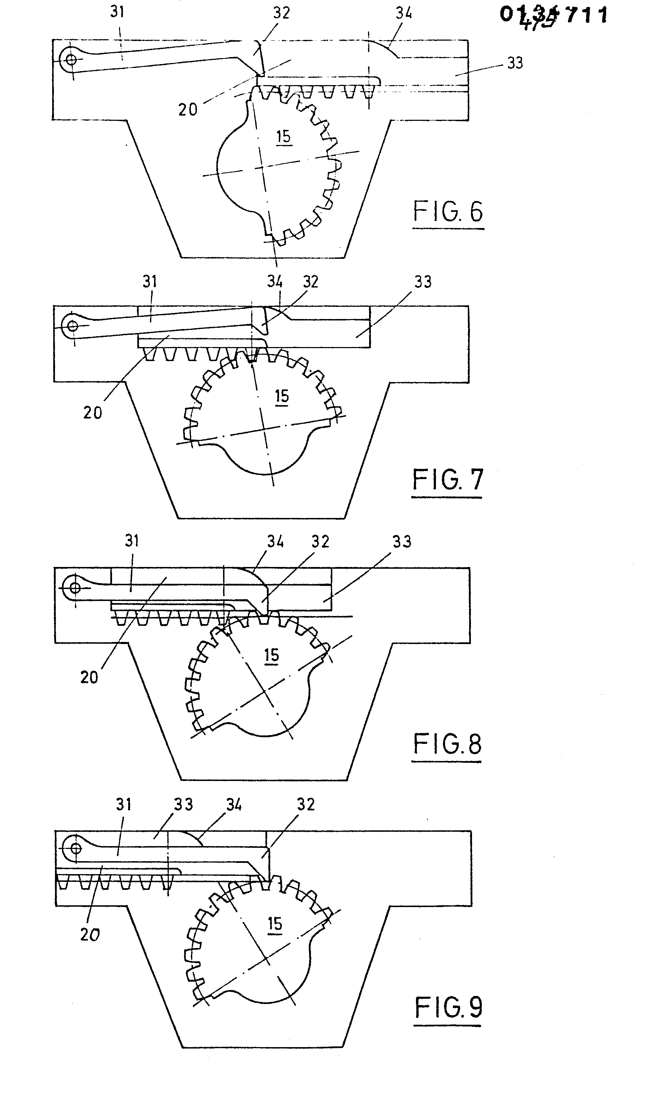

Jedoch kann in dieser Winkelstellung des Handhebels die Fernbedienung durch die in der Fahrerkabine vorgesehene Betätigungsvorrichtung für die Lageregelung des Krafthebers übersteuert werden, wodurch der Mitnehmer 17 aus der 135$^{\circ}$ - Stellung (Fig. 4) in die in Fig. 5 wiedergegebene, der oberen Hubendstellung des Kraftheber-Zylinders entsprechende Lage gebracht wird. Die Fernbedienung mittels des Handhebels 11 kann erst dann wieder genutzt werden, wenn durch die Betätigungsvorrichtung in der Fahrerkabine die Zahnstange 20, das damit kämmende Zahnrad 15 und der hiermit verbundene Mitnehmer 17 in den Bereich zurückgebracht worden sind, der sich mit dem Zwei-Drittel-Stellweg des Handhebels 11 deckt.

Nach dem Ausführungsbeispiel der Fig. 6 bis 9 ist zur Schwenkwegbegrenzung des Handhebels 11 als Anschlag ein in vertikaler Ebene schwenkbarer Sperrhebel 31 vorgesehen, der an seinem freien Ende mit einem hakenförmigen Ansatz 32 versehen ist und dadurch wie ein Klinkenhebel wirkt.

Das mit diesem hakenförmigen Ansatz 32 versehene freie Ende des Sperrhebels 31 ist in einer Kulisse 33 geführt, die in der Zahnstange 20 eingelassen ist. Durch die Kulisse 33 wird der Sperrhebel 31 während der Verstellung des Handhebels über seinen vorgesehenen Stellweg auf Abstand von den Zähnen des Zahnrades 15 gehalten, wodurch Zahnrad und Zahnstange in Eingriff bleiben, wie dies die Fig. 6 und 7 zeigen.

Nach zwei Dritteln des insgesamt möglichen Stellweges wird das mit dem Handhebel verbundene Zahnrad 15 an einem weiteren Verdrehen dadurch gehindert, daß das freie Ende des Sperrhebels gegen eine Auflauframpe 34 der Kulisse 33 anläuft und durch diese niedergedrückt wird, wodurch der hakenförmige Ansatz 32 in eine Zahnlücke des Zahnrades 15 einrastet und das Zahnrad mit Handhebel blockiert. Nachdem der letzte Zahn der Zahnstange 20 nicht mehr mit dem Zahnrad 15 im Eingriff steht, kann der restliche Schwenkweg von der in der Fahrerkabine untergebrachten Betätigungsvorrichtung durchgeführt werden.

Auch hier läßt sich die Fernbedienung erst dann wieder nutzen, wenn von der Fahrerkabine aus der Kraftheber-Zylinder so weit zurückgefahren worden ist, bis sich die Zahnstange 20 wieder im Zwei-Drittel-Stellwegbereich des Handhebels befindet. Die Zahnstange verdrängt dann den in der Zahnlücke eingerasteten Sperrhebel 31 nach oben (Übergang der Stellungen von Fig. 8 nach Fig. 7), wodurch sich der erste Zahn der Zahnstange in das Zahnrad einfädelt. Aus dieser Stellung heraus kann die Fernbetätigungsvorrichtung wieder mit dem Handhebel heruntergesteuert werden.

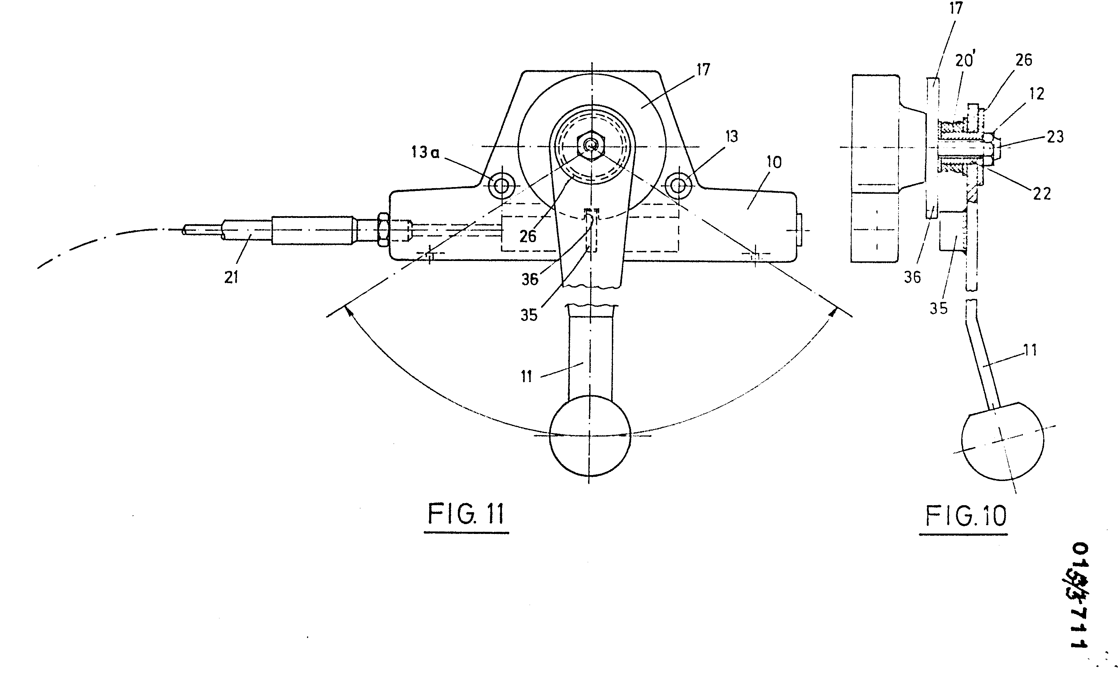

Nach dem Ausführungsbeispiel der Fig. 10 und 11 besitzt der Handhebel 11 keine über seine Schwenkachse hinausgehende Verlängerung, dagegen eine in Richtung des Lagergehäuses vorstehende Nase 35. Diese Nase kommt in der Ausgangslage des Handhebels ($0^{o}$ - Stellung des Handhebels bzw. untere Hubendstellung) mit dem am Gehäuseteil 10 vorstehenden Anschlag 13 zur Anlage, wohingegen am Ende des Schwenkweges von etwa $120^{o}$ ein weiterer An-schlag 13a vorgesehen ist, gegen den die Nase 35 am Ende des Stellweges des Handhebels 11 zur Anlage kommt und den Handhebel mechanisch arretiert.

Gleichzeitig dient die Nase 35 zur formschlüssigen Verbindung des Handhebels mit dem Mitnehmer 17, der in dieser Ausführungsform als kreisförmige Scheibe ausgebildet ist und einen radial verlaufenden Schlitz 36 aufweist. Durch Gegendrücken des Handhebels rastet die Nase 35 bei übereinstimmender Stellung in diesen Schlitz 36 ein, wodurch Mitnehmer und Zahnrad 16 durch den Handhebel verdreht werden können.

Beim Heraufsteuern in Richtung einer Hubvergrößerung des Kraftheber-Zylinders kann dem Betreiber der Anlage die bevorstehende Arretierposition dadurch angezeigt werden, daß zur Erzeugung eines Druckpunktes im Zahnrad eine federbelastete Kugel eingelassen ist, die kurz vor Schwenkwegbegrenzung des Handhebels in eine gehäuseseitige Rastnute einfällt. Wird der Handhebel nicht über diesen Druckpunkt hinaus verstellt, tritt kein Arretiereffekt ein.

Die Schwenkwegbegrenzung kann auf einer feststehenden Einstellskala hinter dem Handhebel auch durch Markierung angezeigt werden.

PATENTANSPRÜCHE
---------------------------------

1. Betätigungsvorrichtung für ein Regelwegeventil eines hydraulischen Krafthebers eines landwirtschaftlichen Kraftfahrzeugs, insbesondere Ackerschleppers, zur zusätzlichen Fernbetätigung der Lageregelung des Krafthebers und der damit verbundenen Geräteschiene unabhängig von der in der Fahrerkabine angeordneten Betätigungsvorrichtung unter Verwendung eines drehbar gelagerten Handhebels, mit dem drehfest ein Zahnrad verbunden ist, dessen Drehbewegung bei Verstellung des Handhebels in eine Längsbewegung einer verschiebbar geführten und mit dem Zahnrad kämmenden Zahnstange überführbar ist und die Längsbewegung der Zahnstange mittels eines biegsamen Gestänges an das Regelgestänge des Regelwegeventils übertragbar ist, dadurch gekennzeichnet, daß der Handhebel (11) nach Erreichen eines Teils seines dem gesamten Hub des Kraftheber- Zylinders entsprechenden Stellweges mechanisch arretierbar oder in seinem Schwenkweg begrenzbar ist.

2. Vorrichtung nach Anspruch 1, dadurch gekennzeichnet, daß der Handhebel (11) vor dem als kritisch betrachteten Übergang einer in bezug auf den Stellweg des Handhebels (11) nicht mehr proportionalen Lageregelung, der häufig bei etwa zwei Dritteln des gesamten Stellweges liegt, mechanisch arretierbar oder in seinem Schwenkweg begrenzbar ist.

3. Vorrichtung nach einem der Ansprüche 1 oder 2, dadurch gekennzeichnet, daß an einem Gehäuseansatz (10) des die Lagerwelle (12) des Handhebels (11) aufnehmenden Gehäuseteils auf Abstand zur Schwenkachse des Handhebels zur Schwenkwegbegrenzung als auch zur Begrenzung der Ausgangslage mindestens ein in die senkrecht zur Schwenkachse verlaufende Ebene des Handhebels hineinragender Anschlag (13 bzw. 13 und 13a) vorgesehen ist.

4. Vorrichtung nach Anspruch 3, dadurch gekennzeichnet, daß auf Abstand zur Schwenkachse des Handhebels (11) zwei Anschläge (13 und 13a) vorgesehen sind, die zwischen Ausgangsstellung und Endstellung des Handhebels etwa 120° winkelversetzt in bezug auf die Schwenkachse des Handhebels angeordnet sind.

5. Vorrichtung nach Anspruch 3, dadurch gekennzeichnet, daß der Handhebel (11) über seine Lagerwelle (12) hinaus durch einen Teil (14) verlängert ist, der zur Schwenkwegbegrenzung mit einem einzigen Anschlag (13) zusammenwirkt, durch den der Handhebel auch in seiner der Ausgangsstellung entsprechenden Schwenkstellung begrenzt ist.

6. Vorrichtung nach Anspruch 3, dadurch gekennzeichnet, daß mit dem Zahnrad (15) drehfest ein Mitnehmer (17) verbunden ist, der über eine aufhebbare formschlüssige Verbindung (18, 19 bzw. 35, 36) mit dem Handhebel (11) kuppelbar ist und vom Handhebel nach Erreichen des vorgesehenen Schwenkweges des Handhebels von diesem entkuppelbar ist.

7. Vorrichtung nach Anspruch 6, dadurch gekennzeichnet, daß die formschlüssige Verbindung (35, 36) durch eine am Handhebel (11) vorgesehene Nase (35) gebildet ist, die durch Gegendrücken des Handhebels in einem im Mitnehmer (17) von scheibenförmiger Umrißgestalt vorgesehenen Schlitz (36) einrastbar ist.

8. Vorrichtung nach Anspruch 7, dadurch gekennzeichnet, daß die Nase (35) zur Positionierung der Ausgangslage und der Lage am Ende des Schwenkweges mit den um 120$^{\text{O}}$ winkelversetzt vorstehenden Anschlägen (13 und 13a) zusammenwirkt.

9. Vorrichtung nach Anspruch 6, dadurch gekennzeichnet, daß die formschlüssige Verbindung durch einen am Mitnehmer (17) vorstehenden Zapfen (18) gebildet ist, der durch Gegendrücken des Handhebels mit einem darin vorgesehenen Loch (19) verbindbar ist.

10. Vorrichtung nach einem der Ansprüche 7 oder 9, dadurch gekennzeichnet, daß der Handhebel beim Loslassen aus seiner durchgedrückten eingekuppelten Lage selbsttätig in seine ausgekuppelte Lage senkrecht zu seiner Schwenkachse überführbar ist.

11. Vorrichtung nach Anspruch 10, dadurch gekennzeichnet, daß der Handhebel im nichtbetätigten Zustand mittels eines Federelements (20) gegenüber dem Mitnehmer (17) außer Eingriff gehalten ist.

12. Vorrichtung nach Anspruch 11, dadurch gekennzeichnet, daß das Federelement (20) als Federscheibe, Tellerfeder, Gummifeder oder Druckfeder ausgebildet ist.

13. Vorrichtung nach Anspruch 1, dadurch gekennzeichnet, daß das biegsame Gestänge als Drahtkabel (21) (Bowdenzug) ausgebildet ist, dessen eines Ende an die Zahnstange (20) angeschlossen ist.

14. Vorrichtung nach Anspruch 1, dadurch gekennzeichnet, daß der Handhebel (11) in der Nähe des Krafthebers gelagert und außerhalb des Kraftfahrzeugs betätigbar ist.

15. Vorrichtung nach Anspruch 1, dadurch gekennzeichnet, daß das Zahnrad (15) auf etwa seinem halben Umfang mit Zähnen versehen ist.

16. Vorrichtung nach Anspruch 15, dadurch gekennzeichnet, daß das Zahnrad (15) als Zahnsegment ausgebildet ist.

17. Vorrichtung nach einem der Ansprüche 1 oder 2, dadurch gekennzeichnet, daß zur Schwenkwegbegrenzung des Handhebels (11) als Anschlag ein vertikal schwenkbarer Sperrhebel (31) vorgesehen ist, dessen mit einem hakenförmigen Ansatz (32) versehenes freies Ende in einer an der Zahnstange (20) angeordneten Kulisse (33) geführt und während der Verstellung des Handhebels auf Abstand vom Zahnrad (15) des Handhebels gehalten ist und der mit seinem hakenförmigen Ansatz (32) nach Durchgang der Zahnstange (20) in eine Zahnlücke des Zahnrads (15) einrastet und den Handhebel (11) blockiert.

0131711

18. Vorrichtung nach Anspruch 17, dadurch gekennzeichnet, daß die Kulisse (33) in der Zahnstange (20) eingelassen ist.

19. Vorrichtung nach Anspruch 17, dadurch gekennzeichnet, daß der Sperrhebel (31) mittels einer in der Kulisse (33) angebrachten Auflauframpe (34) in die Zahnlücke des Zahnrades einrastet.

20. Vorrichtung nach Anspruch 1, dadurch gekennzeichnet, daß im Zahnrad (15) bzw. in der Zahnstange (20) eine federbelastete Kugel eingelassen ist, die in einer kurz vor Erreichen des begrenzten Schwenkweges des Handhebels zur Erzeugung eines Druckpunktes in eine gehäuseseitige Rastnute einfällt.

21. Vorrichtung nach Anspruch 17, dadurch gekennzeichnet, daß die Kulisse (33) derart ausgebildet ist, daß diese nach Verschwenken des Sperrhebels (31) in die das Zahnrad (15) arretierende Position ein weiteres Verschieben der Zahnstange (20) zuläßt, wenn aus der Fahrerkabine heraus durch Betätigung der Lageregelung über das biegsame Gestänge (21) eine Kraft auf die Zahnstange (20) ausgeübt wird, welche in die Richtung wirkt, die die Zahnstange (20) gegenüber den Zähnen des Zahnrades (15) außer Eingriff bringt.

FIG. 1

FIG. 3

FIG. 2

FIG. 5

0131711

2/5

FIG. 4

0131711

0134711

FIG. 6

FIG. 7

FIG. 8

FIG. 9

FIG. 11

FIG. 10